# EUROPEAN PATENT APPLICATION

(11) **EP 4 598 068 A1**
(43) Date of publication of application: **06.08.2025**
(21) Application number: 23864647.5
(22) Date of filing: 11.09.2023
(51) Int. Cl.: H04W 4/06, H04W 76/27

(54) **METHOD AND DEVICE FOR WIRELESS COMMUNICATION**

(30) Priority: 13.09.2022 CN 202211109323
(71) Applicant: Apogee Networks, LLC, Dallas, TX 75201 (US)
(72) Inventor: CHEN, Yu, Shanghai 201206 (CN); ZHANG, Xiaobo, Shanghai 201206 (CN)
(74) Representative: Gunzelmann, Rainer
(86) International application number: PCT/CN2023/117907
(87) International publication number: WO 2024/055915

(57) **Abstract**

The present application discloses a method and apparatus for wireless communication. The method comprises: receiving first signaling; in response to receiving the first signaling, entering an RRC inactive state, whether to maintain a first cell in the RRC inactive state depending on whether execution of the first signaling will suspend a radio bearer in a first radio bearer set; when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell being a serving cell of a first node, and the first cell providing first service. The methods proposed by the present application can ensure quality received by the service.

## Description

### Technical Field

The present application relates to transmission methods and devices in wireless communication systems, in particular to methods and apparatuses in terms of broadcast and multicast services of wireless communications, continuity of service reception, etc.

### Background Art

In the future, the application scenarios of wireless communication systems will become more and more diversified, and different application scenarios will put different performance requirements on the system. In order to meet the different performance needs of multiple application scenarios, it was decided to study a new radio (NR) or fifth generation (5G) at the 3GPP (3rd Generation Partnership Project) RAN (Radio Access Network) #72 plenary meeting. The NR WI (Work Item) was approved at the 3GPP RAN #75 plenary meeting, starting the standardization work for NR.

In communication, both LTE (Long Term Evolution) and 5G NR involve the accurate reception of reliable information, optimized energy efficiency ratio, determination of information validity, flexible resource assignment, scalable system architecture, efficient non-access stratum information processing, lower service interruption and drop rates, and support for low power consumption. These are of great significance in normal communication between base stations and user equipment, rational resource scheduling, and system load balancing. It can be said to be the cornerstone of high throughput, meeting various service communication requirements, improving the spectrum utilization rate, and enhancing service quality, all of which are indispensable for eMBB (enhanced Mobile BroadBand), URLLC (Ultra-Reliable Low-Latency Communication), and eMTC (enhanced Machine Type Communication). At the same time, in IIoT (Industrial Internet of Things), in V2X (Vehicular to X), in device-to-device communication (Device to Device), in unlicensed spectrum communication, in user communication quality monitoring, in network planning and optimization, in NTN (Non Territorial Network), in TN (Territorial Network), in dual connectivity systems, in wireless resource management and multi-antenna codebook selection, and in signaling design, neighborhood management, service management, and beamforming, there are widespread needs. Information transmission methods are divided into broadcast and unicast, and both transmission methods are essential for 5G systems because they are very helpful in meeting the above needs. The way that UE is connected to the network can be either direct connection or through relay connection.

With the continuous expansion of system scenarios and increasing complexity, higher demands are placed on reducing drop rates, minimizing latency, improving reliability, enhancing system stability, increasing service flexibility, and optimizing power efficiency. Additionally, the system design must take compatibility across different systems and versions into account.

For the meanings of the concepts, terms and abbreviations in the present application, reference can be made to the 3GPP standard, including but not limited to:
https://www.3gpp.org/ftp/Specs/archive/21 series/21.905/21905-h10.zip
https://www.3gpp.org/ftp/Specs/archive/38_series/38.300/38300-h10.zip
https://www.3gpp.org/ftp/Specs/archive/38 series/38.331/38331-h10.zip
https://www.3gpp.org/ftp/Specs/archive/38 series/38.321/38321-h10.zip
https://www.3gpp.org/ftp/Specs/archive/38 series/38.304/38304-h10.zip

### Summary of the Invention

The Multicast and Broadcast Service (MBS) is an important communication method in 5G networks. It is often used for video transmission, occupies large bandwidth and consumes significant power. On the other hand, MBS can also be applied to numerous IoT devices to reduce network resource consumption, as power saving is very important for IoT devices. Therefore, terminals using MBS services have a general need to save power. One possible way to save power is to enter an RRC_INACTIVE state to receive MBS services when there is no other service. Receiving multicast services in the RRC_INACTIVE state, especially continuously receiving MBS services by entering an RRC_INACTIVE state from an RRC_CONNECTED state, is a challenge that is not supported by previous protocols. When a user starts receiving an MBS service in the RRC_CONNECTED state and then enters the RRC_INACTIVE state to maintain reception for power saving, this creates a continuous reception issue. In the prior art, the issue of continuous reception from the RRC_CONNECTED state to the RRC_INACTIVE state does not exist, because normally a user has already completed current services before entering RRC_INACTIVE state. Therefore, in the prior art, when the user equipment enters the RRC_INACTIVE state, it first needs to select a resident cell. Generally, the cell with the strongest signal strength is selected. However, the MBS service to be received may not be available on that cell, or even if available, may not be synchronized with the transmission of the current cell. Consequently, selecting another cell to continue receiving services that have been received in the RRC_CONNECTED state would cause service reception interruptions and affect user experience. Therefore, how to ensure the continuity of service reception when entering the RRC_INACTIVE state from the RRC_CONNECTED state is a problem to be solved.

In response to the above-mentioned problem, the present application provides a solution.

It should be noted that in case of no conflict, the embodiments and features in any node of the present application may be applied to any other node. In case of no conflict, the embodiments and the features in the embodiments in the present application can be arbitrarily combined with each other. The methods proposed in the present application can also be used for solving other problems in communication, for example, including scenarios requiring unicast radio bearer reception in the RRC_INACTIVE state, in particular those required to guarantee continuous reception from the RRC_CONNECTED state to the RRC_INACTIVE state using unicast radio bearers.

The present application discloses a method for use in a first node for wireless communication, comprising:
receiving first signaling; and in response to receiving the first signaling, entering an RRC inactive state, whether to maintain a first cell in the RRC inactive state depending on whether execution of the first signaling will suspend a radio bearer in a first radio bearer set;
when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, the problems to be solved in the present application comprise: how to better support communication in the RRC_INACTIVE state, how to achieve better power saving, how to better support reception of broadcast multicast services, how to receive broadcast multicast services in the RRC_INACTIVE state, and how to ensure continuity of broadcast and multicast service reception; and how to ensure continuity of service reception from the RRC_CONNECTED state to the RRC_INACTIVE state, how to determine a serving cell in the RRC_INACTIVE state, and how to perform cell selection based on service reception requirements.

As one embodiment, benefits of the above method comprise: power saving, service quality enhancement, service continuity support, service reception in the RRC_INACTIVE state, service interruption avoidance, and improved adaptability.

Specifically, according to one aspect of the present application, the sentence "the first cell is maintained when at least one radio bearer in the first radio bearer set is not suspended" is only true if the first cell meets a second criterion.

Specifically, according to one aspect of the present application, when execution of the first signaling suspends all radio bearers in the first radio bearer set, a cell selection process is performed in accordance with the first criterion; and when execution of the first signaling does not suspend at least one radio bearer in the first radio bearer set, the cell selection process is not performed, and the cell selection process being not performed is used for determining that the first cell is maintained in the RRC_INACTIVE state.

Specifically, according to one aspect of the present application, the first service is received prior to receiving the first signaling.

Specifically, according to one aspect of the present application, the meaning of the sentence "when execution of the first signaling does not suspend at least one radio bearer in the first radio bearer set, the first cell is maintained in the RRC_INACTIVE state" comprises: execution of the first signaling comprises cell selection, and the first cell is selected with preference in cell selection.

Specifically, according to one aspect of the present application, the meaning of the phrase "the first cell is selected with preference" comprises: during cell selection, the first cell is directly selected without performing a comparison of reception quality for candidate cells.

Specifically, according to one aspect of the present application, the meaning of the phrase "the first cell is selected with preference" comprises: in the process of performing cell selection, a first offset is applied to the first cell.

Specifically, according to one aspect of the present application, a first signal is transmitted as a response in which any condition in a second condition set is satisfied, the first signal being used for requesting RRC connection continuation;
wherein, whether the second condition set comprises a second condition is related to whether non-unicast services for multicast are received in an RRC discontinuous state, when non-unicast services for multicast are not received in an RRC discontinuous state, the second condition set does not comprise the second condition, when non-unicast services for multicast are received in an RRC discontinuous state, the second condition set comprises the second condition; and the second condition is that a quality of a serving cell is worse than a second quality threshold.

Specifically, according to one aspect of the present application, in the RRC_INACTIVE state, a radio bearer used for the first service is suspended in response to completion of reception of the first service and the radio bearer used for the first service not carrying other non-unicast services.

Specifically, according to one aspect of the present application, the first node is user equipment.

Specifically, according to one aspect of the present application, the first node is an Internet of Things terminal.

Specifically, according to one aspect of the present application, the first node is a relay.

Specifically, according to one aspect of the present application, the first node is a vehicle terminal.

Specifically, according to one aspect of the present application, the first node is an aircraft.

The present application discloses a first node for wireless communication, comprising:
a first receiver for receiving first signaling, and in response to receiving the first signaling, entering an RRC inactive state, whether to maintain a first cell in the RRC inactive state depending on whether execution of the first signaling will suspend a radio bearer in a first radio bearer set;
when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, compared with the traditional solution, the present application has the following advantages:
It supports receiving broadcast and/or multicast services in the RRC_INACTIVE state, which achieves better power saving.

The continuity of service reception is ensured, that is, reception in the RRC_CONNECTED state can be smoothly transferred to reception in the RRC_INACTIVE state.

The communication interruption caused by either the need to enter the RRC_CONNECTED state or the initiation of an RRC continuation request due to other RRC_INACTIVE state communications is avoided.

After re-entering the RRC_CONNECTED state from the RRC_INACTIVE state, continuous reception of services can be ensured.

The suspension and continuation of broadcast and/or multicast services that are not received in the RRC_INACTIVE state are supported.

RRC connections can be restored or continued at the appropriate time, which is conducive to ensuring service reception quality.

After entering an RRC discontinuous state, an appropriate cell can be selected to ensure service continuity.

### Brief Description of the Drawings

Other features, objects and advantages of the present application will become more apparent by reading the detailed description of non-limiting embodiments with reference to the following drawings:
FIG. 1 shows a flowchart of receiving first signaling and entering an RRC_INACTIVE state in response to receiving the first signaling according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of a criterion for cell selection reselection according to one embodiment of the present application;
FIG. 7 shows a schematic diagram in which a cell selection process not performed is used for determining that a first cell is maintained in the RRC_INACTIVE state according to one embodiment of the present application;
FIG. 8 illustrates a schematic diagram of a processing apparatus for a first node according to one embodiment of the present application; and
FIG. 9 illustrates a schematic diagram of a processing apparatus for a first node according to one embodiment of the present application.

### Detailed Description of Embodiments

The technical solution of the present application will be further described in detail below in conjunction with the accompanying drawings. It should be noted that the embodiments and features in the embodiments in the present application can be arbitrarily combined with each other in case of no conflict.

### Embodiment 1

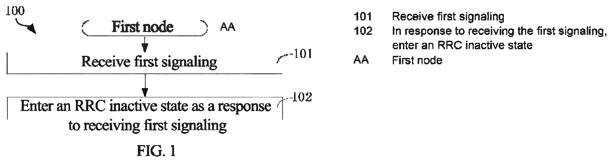

Embodiment 1 illustrates a flowchart of receiving first signaling and entering an RRC_INACTIVE state in response to receiving the first signaling according to one embodiment of the present application, as shown in FIG. 1. In FIG. 1, each block represents one step. It should be specifically emphasized that the sequence of blocks in the figure does not indicate temporal ordering of the represented steps.

In Embodiment 1, a first node in the present application, in step 101, receives first signaling, and in step 102, enters the RRC_INACTIVE state in response to receiving the first signaling.

As one embodiment, whether a first node maintains a first cell in the RRC_INACTIVE state depends on whether execution of the first signaling suspends a radio bearer in a first radio bearer set.

As one embodiment, when execution of the first signaling does not suspend at least one radio bearer in the first radio bearer set, the first cell is maintained in the RRC_INACTIVE state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, the first node is UE (User Equipment).

As one embodiment, the first node is an MS (Mobile Station).

As one embodiment, bandwidth adaptation is supported in 5G NR; and a subset of the total cell bandwidth of a cell is referred to as a BWP; A base station implements bandwidth adaptation by configuring BWPs for the UE and indicating the UE which of the configured BWPs is the currently active BWP.

As one embodiment, SpCell of the first node refers to PCell of the first node.

As one embodiment, SpCell of the first node refers to PSCell of the first node.

As one embodiment, a serving cell refers to a cell on which the UE is resident; Performing cell search comprises: UE searches for a suitable cell of a selected PLMN (Public Land Mobile Network) or SNPN (Stand-alone Non-Public Network), selects the suitable cell to provide available services, and monitors control channels of the suitable cell. This process is defined as residing on a cell. That is, a cell on which the UE is resident is the serving cell for that UE. Residing on a cell in an RRC_IDLE state or RRC_INACTIVE state provides the following benefits: the UE can receive system messages from the PLMN or SNPN; after registration, if the UE needs to establish an RRC connection or continue a suspended RRC connection, the UE may perform initial access via control channels of the resident cell; the network can page the UE; and the UE can receive ETWS (Earthquake and Tsunami Warning System) and CMAS (Commercial Mobile Alert System) notifications.

As one embodiment, for a UE in the RRC_CONNECTED state without CA/DC (Carrier Aggregation/Dual Connectivity) configurations, there is only one serving cell comprising a primary cell; and if the UE is connected to only one cell, that cell is the primary cell of the UE. For a UE in the RRC_CONNECTED state with CA/DC (Carrier Aggregation/Dual Connectivity) configurations, a serving cell is used for indicating a cell set comprising a special cell (SpCell) and all secondary cells; The primary cell (PCell) is a cell in a Master Cell Group (MCG), operates on a primary frequency, and is where the UE performs an initial connection establishment procedure or initiates connection reestablishment; for dual connectivity operations, there may also be an SCG (Secondary Cell Group), where the special cell refers to either PCell (Primary Cell) of the MCG or PSCell (Primary SCG Cell) of the SCG; and for non-dual connectivity operations, the special cell refers to PCell.

As one embodiment, a frequency at which SCell (Secondary Cell) operates is a secondary frequency.

As one embodiment, MR-DC (Multi-Radio Dual Connectivity) refers to a dual connection between E-UTRA and NR nodes, or a dual connection between two NR nodes.

As one embodiment, in MR-DC, a radio access node providing a control plane connection to a core network is a master node which may be master eNB, master ng-eNB, or master gNB.

As one embodiment, MCG refers to, in MR-DC, a group of serving cells associated with the master node, comprising SpCell and optionally one or more SCells.

As one embodiment, in MR-DC, a radio access node that provides additional resources to the UE without providing a control plane connection to a core network is a secondary node. The secondary node may be en-gNB, secondary ng-eNB or secondary gNB.

As one embodiment, in MR-DC, a group of serving cells associated with the secondary node is a Secondary Cell Group (SCG), comprising SpCell and optionally one or more SCells.

As one embodiment, PCell is SpCell of the MCG.

As one embodiment, PSCell is SpCell of the SCG.

As one embodiment, an individual content of an information element is referred to as a field.

As one embodiment, an information element is a structured element comprising one or more fields.

As one embodiment, the multicast radio bearer (MRB) is a radio bearer configured for Multicast-Broadcast Service (MBS) multicast or broadcast transmission.

As one embodiment, the multicast radio bearer (MBS) is a point-to-multipoint service, as specifically defined in 3GPP TS 23.247.

As one embodiment, PTP transmission refers to: gNB individually transmits separate copies of MBS data packets to each UE, wherein the gNB schedules the UE-specific PDSCH using a UE-specific PDCCH (physical downlink control channel) scrambled by UE-specific RNTI (for example, C-RNTI), and the UE-specific PDSCH (physical downlink shared channel) is scrambled by the UE-specific RNTI.

As one embodiment, PTM transmission refers to: gNB transmits a copy of MBS data packets to a UE set, wherein, for example, the gNB schedules a group-common PDSCH using a group-common PDCCH scrambled by a group-common RNTI, and the group-common PDSCH is scrambled by the group-common RNTI.

As one embodiment, only PCell exists in the RRC_INACTIVE state.

As one embodiment, UE possesses full communication capabilities only in the RRC_CONNECTED state.

As one embodiment, MRB can carry either broadcast services or multicast services.

As one embodiment, an MBS service is a unicast service.

As one embodiment, each MBS service is associated with TMGI (Temporary Mobile Group Identity).

As one embodiment, services identified by TMGI, including but not limited to Protocol Data Unit (PDU) sessions or Quality of Service (QoS) flows, are applicable to the non-unicast services described herein.

As one embodiment, the first service is an MBS service.

As one embodiment, the first service is a multicast service.

As one embodiment, the first service is an MBS multicast service.

As one embodiment, the first service is or corresponds to a multicast QoS flow.

As one embodiment, the first service is or corresponds to an MBS QoS flow.

As one embodiment, the first service is or corresponds to a multicast session.

As one embodiment, the first signaling comprises MAC CE.

As one embodiment, the first signaling comprises RRC signaling.

As one embodiment, the first signaling uses SRB1 (signaling radio bearer 1) to carry transmission.

As one embodiment, the first signaling comprises RRCReconfiguration.

As one embodiment, the first signaling is or comprises RRCRelease.

As one embodiment, the first signaling is used for suspending RRC connection.

As one embodiment, after the first signaling is applied, RRC connection of the first node is not released.

As one embodiment, the first node is configured with at least one radio bearer prior to receiving the first signaling.

As one embodiment, the first node executes operations indicated by the first signaling either 60ms after receiving the first signaling, or upon successful acknowledgment of the first signaling by a protocol layer below RRC of the first node.

As one embodiment, the first signaling comprises a suspension configuration.

As one embodiment, the first signaling indicates RNTI for use in the RRC_INACTIVE state.

As one sub-embodiment of this embodiment, the RNTI for use in the RRC_INACTIVE state has a length greater than 16 bits.

As one sub-embodiment of this embodiment, the RNTI for use in the RRC_INACTIVE state comprises I-RNTI.

As one embodiment, the first signaling indicates a paging cycle.

As one embodiment, the first signaling indicates an extended paging cycle.

As one embodiment, the first signaling indicates RAN notification area information.

As one embodiment, the first signaling indicates nextHopChainingCount.

As one embodiment, the nextHopChainingCount is used for key generation.

As one embodiment, the first signaling indicates a first configuration for small data transmission.

As one embodiment, a radio bearer associated with the first configuration is a DRB (data radio bearer) and/or an SRB (signaling radio bearer).

As one embodiment, the first signaling comprises a first field for configuring positioning in the RRC_INACTIVE state.

As one embodiment, the first signaling comprises a suspendConfig field.

As one embodiment, the first node performs a first operation set in response to receiving the first signaling.

As one embodiment, the first operation set comprises at least one operation.

As one embodiment, the first operation set comprises stopping all timers in the first set of timers.

As one sub-embodiment of this embodiment, the first set of timers comprises at least one of T380, T320, T316, T350, T346g, T331, T390, T420, T430, T319, T319a, and MBS-related timers.

As one embodiment, the first operation set comprises: starting at least one timer in a second timer set.

As one sub-embodiment of this embodiment, the second timer set comprises at least one of the MBS-related timers and T302.

As one embodiment, the first operation set comprises: performing cell selection.

As one embodiment, the first operation set comprises: performing frequency selection.

As one embodiment, the first operation set comprises: resetting at least one parameter of MAC.

As one embodiment, the first operation set comprises: resetting some rather than all parameters of MAC.

As one embodiment, the first operation set comprises: reconstructing an RLC entity of SRB1.

As one embodiment, the first operation set comprises: suspending all SRBs except SRB0.

As one embodiment, the first operation set comprises: suspending all DRBs.

As one embodiment, the first operation set does not comprise: suspending the first radio bearer.

As one embodiment, the first signaling is transmitted via unicast

As one embodiment, the first signaling is received in the RRC_CONNECTED state.

As one embodiment, the meaning of the phrase "entering the RRC_INACTIVE state" comprises: entering the RRC_INACTIVE state from the RRC_CONNECTED state.

As one embodiment, the meaning of the phrase "entering the RRC_INACTIVE state" comprises: entering the RRC_INACTIVE state from the RRC_INACTIVE state.

As one embodiment, the first cell is a serving cell of the first node prior to receiving the first signaling.

As one embodiment, the first cell is a sender of the first signaling.

As one embodiment, the first cell is PCell of the first node.

As one embodiment, the first cell is PSCell of the first node.

As one embodiment, the first cell is SpCell of the first node.

As one embodiment, the first cell is SCell of the first node.

As one embodiment, the first cell is one serving cell in the MCG of the first node.

As one embodiment, the first cell is one serving cell in the SCG of the first node.

As one embodiment, the first node has an RRC connection to the first cell.

As one embodiment, the first node receives the first service via the first cell prior to receiving the first signaling.

As one embodiment, an SIB message of the first cell indicates that the first service is provided or supported.

As one embodiment, the cell selection process of the present application does not comprise cell reselection.

As one embodiment, USD (User service description) of the first node comprises the first cell providing the first service.

As one embodiment, USD of the first node comprises frequency of the first cell providing the first service.

As one embodiment, continuity of reception of the first service needs to be guaranteed.

As one embodiment, the first node receives the first service in the RRC_INACTIVE state.

As one embodiment, the first service is not a broadcast service.

As one embodiment, the meaning of the phrase "maintain a first cell" comprises: determining that the first cell is a serving cell of the first node after entering the RRC_INACTIVE state.

As one embodiment, the meaning of the phrase "maintain a first cell" comprises: selecting the first cell as a serving cell of the first node after entering the RRC_INACTIVE state.

As one embodiment, the meaning of the phrase "maintain a first cell" comprises: the first cell is a serving cell of the first node both after entering the RRC_INACTIVE state and before entering the RRC_INACTIVE state.

As one embodiment, the meaning of the phrase "maintain a first cell" comprises: execution of the first signaling comprises the cell selection process, in which reception of the first service is considered.

As one embodiment, the meaning of the phrase "execution of the first signaling does not suspend at least one radio bearer in the first radio bearer set" comprises: after execution of the first signaling, at least one radio bearer in the first radio bearer set is not suspended.

As one embodiment, the meaning of the phrase "execution of the first signaling does not suspend at least one radio bearer in the first radio bearer set" comprises: after entering the RRC_INACTIVE state, at least one radio bearer in the first radio bearer set is not suspended.

As one embodiment, at least one radio bearer in the first radio bearer set is not suspended before execution of the first signaling.

As one embodiment, all radio bearers in the first radio bearer set are not suspended before execution of the first signaling.

As one embodiment, the meaning of the phrase "execution of the first signaling does not suspend at least one radio bearer in the first radio bearer set" comprises: the first operation set does not comprise: suspending at least one radio bearer in the first radio bearer set.

As one embodiment, the meaning of the phrase "execution of the first signaling does not suspend at least one radio bearer in the first radio bearer set" comprises: suspending only part of radio bearers in the first radio bearer set in response to receiving the first signaling.

As one embodiment, the meaning of the phrase "execution of the first signaling does not suspend at least one radio bearer in the first radio bearer set" comprises: suspending only radio bearers other than the first radio bearer sets in response to receiving the first signaling.

As one embodiment, the meaning of the phrase "execution of the first signaling suspends all radio bearers in the first radio bearer set" comprises: after execution of the first signaling, all radio bearers in the first radio bearer set are suspended.

As one embodiment, the meaning of the phrase "execution of the first signaling suspends all radio bearers in the first radio bearer set" comprise: after entering the RRC_INACTIVE state, all radio bearers in the first radio bearer set are suspended.

As one embodiment, the meaning of the phrase "execution of the first signaling suspends all radio bearers in the first radio bearer set" comprises: the first operation set comprises: suspending all radio bearers in the first radio bearer set.

As one embodiment, the meaning of the phrase "execution of the first signaling suspends all radio bearers in the first radio bearer set" comprises: suspending all radio bearers in the first radio bearer set in the first radio bearer set in response to receiving the first signaling.

As one embodiment, radio bearers in the first radio bearer set are all radio bearers related to broadcast or multicast.

As one embodiment, radio bearers in the first radio bearer set are all MRBs for reception in the RRC_INACTIVE state.

As one embodiment, radio bearers in the first radio bearer set are all MRBs.

As one embodiment, radio bearers in the first radio bearer set are all MRBs for multicast services.

As one embodiment, the first radio bearer set comprises all MRBs of the first node.

As one embodiment, the first radio bearer set comprises all MRBs for multicast services of the first node.

As one embodiment, the first radio bearer set is independent of SDT (small data transmission).

As one embodiment, the meaning of the phrase "performs a first operation set" is that each operation in the first operation set is performed.

As one embodiment, in response to receiving the first signaling, first information is stored in a first inactive context, the first information comprising at least a first key.

As one embodiment, the first inactive context is a context for the RRC_INACTIVE state.

As one embodiment, when UE enters the RRC_INACTIVE state from the RRC _CONNECTED state, information required to be retained is all stored in the first inactive context.

As one embodiment, the first inactive context is UE Inactive AS Context.

As one embodiment, the first node can only be in one RRC state at any time.

As one embodiment, entering the RRC_INACTIVE state implies leaving the RRC_CONNECTED state.

As one embodiment, entering the RRC_INACTIVE state implies releasing the RRC connection.

As one embodiment, when the first node enters the RRC_INACTIVE state from the RRC_CONNECTED, it stores only the content included in the first information.

As one embodiment, when the first node enters the RRC_INACTIVE state from the RRC_CONNECTED state, all the stored information belongs to the first information.

As one embodiment, the first key comprises a key for encrypting the SRB1.

As one embodiment, the first key comprises a key of a control plane.

As one embodiment, the first key comprises a key of a user plane.

As one embodiment, the first key comprises K_{gNB}.

As one embodiment, the first key comprises K_{RRCint}.

As one embodiment, the first key comprises K_{RRCenc}.

As one embodiment, the first key is used for encrypting the first signaling.

As one embodiment, parameters of radio bearers not suspended in the first radio bearer set are not stored in the first inactive context.

As one embodiment, the meaning of the phrase "multicast radio bearer" comprises a broadcast radio bearer.

As one embodiment, the meaning of the phrase "multicast radio bearer" comprises a multicast radio bearer.

As one embodiment, the meaning of the phrase "multicast radio bearer" comprises an MRB for broadcast.

As one embodiment, the meaning of the phrase "multicast radio bearer" comprises an MRB for multicast.

As one embodiment, the meaning of the phrase "multicast radio bearer" does not comprise an MRB for broadcast.

As one embodiment, the meaning of the phrase "multicast radio bearer" does not comprise an MRB for multicast.

As one embodiment, MRB is MBS Radio Bearer.

As one embodiment, MBS specifically refers to non-unicast services.

As one embodiment, MBS specifically refers to broadcast services.

As one embodiment, MBS specifically refers to multicast services.

As one embodiment, MBS specifically refers to broadcast and multicast services.

As one embodiment, MBS is Multicast Broadcast Service.

As one embodiment, the first node receives data through a first radio bearer in the RRC_INACTIVE state.

As one embodiment, the first radio bearer is a radio bearer that is not suspended in the first radio bearer set.

As one embodiment, the first radio bearer is any one of radio bearers in the first radio bearer set that is not suspended at the time of execution of the first signaling.

As one embodiment, the meaning of the sentence "receives data via a first radio bearer in the RRC_INACTIVE state" comprises: receiving MBS via a first radio bearer in the RRC_INACTIVE state.

As one embodiment, the meaning of the sentence "receives data via a first radio bearer in the RRC_INACTIVE state" comprises: receiving a first service via a first radio bearer in the RRC_INACTIVE state, the first service being a non-unicast service.

As one embodiment, the first service is associated with an identifier for broadcast and multicast services.

As one embodiment, G-RNTI is used for data reception via the first radio bearer in the RRC_INACTIVE state.

As one embodiment, G-CS-RNTI (Group Configured Scheduling RNTI) is used for data reception via the first radio bearer in the RRC_INACTIVE state.

As one embodiment, RNTI (Radio Network Temporary Identifier) is a temporary network identifier.

As one embodiment, radio bearers suspended during execution of the first signaling comprise at least SRB1.

As one embodiment, the meaning of the sentence "a radio bearer in the first radio bearer set that is not suspended by execution of the first signaling is used for carrying the first service" comprises: the first service is mapped to the radio bearer in the first radio bearer set that is not suspended by execution of the first signaling.

As one embodiment, the meaning of the sentence "a radio bearer in the first radio bearer set that is not suspended by execution of the first signaling is used for carrying the first service" comprises: a session or QoS flow of the first service is mapped to the radio bearer in the first radio bearer set that is not suspended by execution of the first signaling.

As one embodiment, the meaning of sentence "a radio bearer in the first radio bearer set that is not suspended by execution of the first signaling is used for carrying the first service" comprises: before entering RRC_INACTIVE state and after entering RRC _INACTIVE state, the first service is transmitted via the radio bearer in the first radio bearer set that is not suspended by execution of the first signaling.

As one embodiment, cell selection is the cell selection process.

As one embodiment, the first criterion comprises an S criterion.

As one embodiment, the first criterion comprises at least one condition.

As one embodiment, the first criterion comprises that a cell with the largest RSRP (Reference Signal Received Power Received Power) is selected.

As one embodiment, the first criterion is a cell selection criterion.

As one embodiment, the first criterion comprises that a cell with the best channel quality is selected.

As one embodiment, the first criterion comprises that a cell with the best evaluation results is selected.

As one embodiment, the first criterion comprises that the selected cells are suitable cells.

As one embodiment, the sentence "the first cell is maintained when at least one radio bearer in the first radio bearer set is not suspended" is true only if the first cell meets a second criterion.

As one embodiment, the meaning of the phrase "the first cell is maintained" is the same as the meaning of "maintain a first cell".

As one embodiment, the second criterion is the first criterion.

As one embodiment, the second criterion is not the first criterion.

As one embodiment, the second criterion does not comprise all items in the first criterion.

As one embodiment, the second criterion comprises part of items in the first criterion.

As one embodiment, the second criterion comprises at least a quality of the first cell meets a first quality threshold.

As one embodiment, the second criterion comprises that the first signaling does not indicate that first frequency is selected with preference and that the first cell does not belong to the first frequency.

As one embodiment, satisfying the second criterion requires satisfying each item in the second criterion.

As one embodiment, when execution of the first signaling suspends all radio bearers in the first radio bearer set, the cell selection process is performed in accordance with the first criterion.

As one embodiment, when execution of the first signaling does not suspend at least one radio bearer in the first radio bearer set, the cell selection process is not performed, and the cell selection process being not performed is used for determining that the first cell is maintained in the RRC_INACTIVE state.

As one embodiment, the meaning of "the cell selection process is not performed" comprises: not selecting a cell through the cell selection process.

As one embodiment, the meaning of "the cell selection process is not performed" comprises: not determining that the first cell is maintained through the cell selection process.

As one embodiment, the meaning of "the cell selection process is not performed" comprises: not determining the first cell as a serving cell in the RRC_INACTIVE state through the cell selection process.

As one embodiment, the meaning of the phrase "the cell selection process is performed in accordance with the first criterion" comprises: a best cell evaluated by the first criterion is selected.

As one embodiment, the first criterion is independent of whether an MBS service or a first service is received in the RRC_INACTIVE state.

As one embodiment, the first criterion is independent of whether to consider continuity of MBS service reception or first service reception.

As one embodiment, the first criterion independent of whether all radio bearers in the first radio bearer set are suspended.

As one embodiment, any cell in the first cell set provides the first service, and at least one cell in the first cell set is not a serving cell of the first node.

As one embodiment, prior to entering the RRC_INACTIVE state, the first node receives the first service only via the first cell in the first cell set.

As one embodiment, the meaning of the sentence "execution of the first signaling suspends a radio bearer in the first radio bearer set" comprises: the first signaling does not indicate that at least one radio bearer in the first radio bearer set is not suspended.

As one embodiment, the first signaling indicates whether the first service is received in the RRC_INACTIVE state.

As one embodiment, the first signaling indicates whether a service is received via at least one radio bearer in the first radio bearer set in the RRC_INACTIVE state.

As one embodiment, the first signaling indicates that the continuity of first service reception or MBS service reception needs to be taken into account when selecting a cell.

As one embodiment, reception or continuous reception of the first signaling service is preferred in cell selection.

As one embodiment, the first node receives the first service via a first radio bearer prior to receiving the first signaling; the first radio bearer belongs to the first radio bearer set; and execution of the first signaling does not suspend the first radio bearer.

As one embodiment, the first node receives the first service via a first radio bearer prior to receiving the first signaling; the first radio bearer belongs to the first radio bearer set; and Execution of the first signaling suspends the first radio bearer, but does not suspend a second radio bearer, the second radio bearer belongs to the first radio bearer set, and the second radio bearer is used for carrying the first service.

As one sub-embodiment of this embodiment, the first signaling indicates the second radio bearer to carry the first service.

As one sub-embodiment of this embodiment, the first signaling indicates that the first radio bearer no longer carries the first service.

As one embodiment, the meaning of the sentence "when execution of the first signaling does not suspend at least one radio bearer in the first radio bearer set, the first cell is maintained in the RRC_INACTIVE state" comprises: execution of the first signaling comprises cell selection, and the first cell is selected with preference in cell selection.

As one embodiment, the meaning of the sentence "when execution of the first signaling does not suspend at least one radio bearer in the first radio bearer set, the first cell is maintained in the RRC_INACTIVE state" comprises: cell selection process is performed, and the first cell is selected with preference in the cell selection process.

As one embodiment, the meaning of the phrase "the first cell is selected with preference" comprises: in the process of performing cell selection, the first cell is directly selected without performing a comparison of reception quality for candidate cells.

As one embodiment, the comparison of reception quality comprises: comparing a cell quality of the first cell and other candidate cells, from which the one with the best cell quality is selected.

As one embodiment, the comparison of reception quality comprises: comparing RSRP of the first cell and other candidate cells, from which the one with the highest RSRP is selected.

As one embodiment, the comparison of reception quality comprises: comparing the first cell and other candidate cells.

As one embodiment, the meaning of the phrase "the first cell is selected with preference" comprises: in the process of performing cell selection, the first cell is directly selected without performing an evaluation of reception quality for the candidate cell.

As one embodiment, the meaning of the phrase "the first cell is selected with preference" comprises: in the process of performing cell selection, a first offset is applied to the first cell.

As one embodiment, the meaning of the phrase "the first cell is selected with preference" comprises: the first signaling indicates the first cell to be selected with preference in the process of cell selection.

As one embodiment, the meaning of the phrase "the first cell is selected with preference" comprises: the first signaling indicates that the first cell has a high priority.

As one embodiment, the first node has a plurality of serving cells prior to receiving the first signaling.

As one embodiment, cell selection in the present application comprises cell reselection.

As one embodiment, cell selection in the present application comprises cell selection and cell reselection.

As one embodiment, cell selection in the present application comprises only the latter of both cell selection and cell reselection.

As one embodiment, after receiving the first signaling, the first node in the RRC_INACTIVE state does not receive any indication to suspend or release a radio bearer in the first radio bearer set that has been suspended during execution of the first signaling.

As one embodiment, the first cell is a cell selected when the first node enters the RRC_INACTIVE state from the RRC_CONNECTED state.

As one embodiment, the first cell is a resident cell of the first node in the RRC_INACTIVE state.

As one embodiment, the first cell is not a serving cell of the first node prior to receiving the first signaling.

As one embodiment, the first node may suspend a radio bearer in the first radio bearer set only in the RRC_CONNECTED state.

As one embodiment, the sentence "whether to maintain a first cell in the RRC_INACTIVE state is related to whether execution of the first signaling suspends a radio bearer in the first radio bearer set" comprises: whether to maintain a first cell in the RRC_INACTIVE state depends on execution of the first signaling suspends a radio bearer in the first radio bearer set.

### Embodiment 2

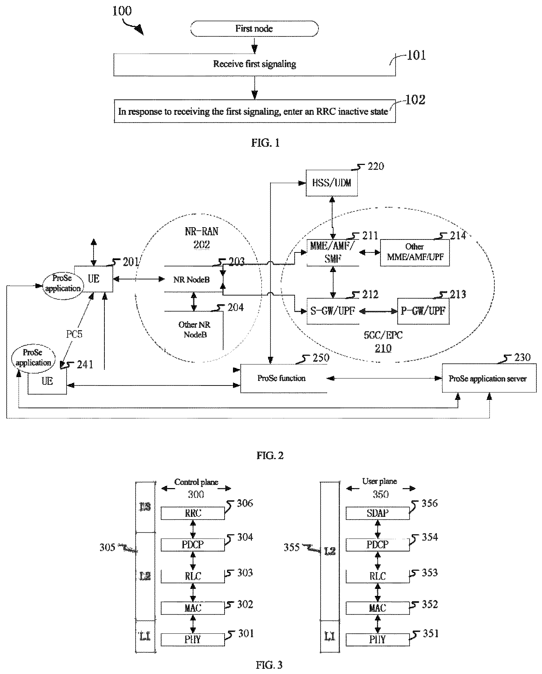

Embodiment 2 illustrates a schematic diagram of a network architecture according to one embodiment of the present application, as shown in FIG. 2. FIG. 2 illustrates a V2X communication architecture under a 5G NR (NewRadio), LTE (Long-Term Evolution) and LTE-A (Long-Term Evolution Advanced) system architecture. The 5G NR or LTE network architecture may be referred to as 5GS (5GSystem)/EPS (Evolved Packet System) or some other suitable terms.

The V2X communication architecture of Embodiment 2 comprises UE (User Equipment) 201, UE241, NG-RAN (Next Generation Wireless Access Network) 202, 5GC (5G Core Network)/EPC (Evolved Packet Core) 210, HSS (Home Subscriber Server)/UDM (Unified Data Management) 220, ProSe function 250, and ProSe application server 230. The V2X communication architecture may be interconnected with other access networks, but these entities/interfaces are not shown for simplicity. As shown, the V2X communication architecture provides packet switching services, however those skilled in the art will readily understand that various concepts presented throughout the present application can be extended to networks or other cellular networks that provide circuit switching services. The NG-RAN comprises NR Node B (gNB) 203 and other gNB204. The gNB203 provides user and control plane protocol termination toward the UE201. The gNB203 may be connected to the other gNB204 via an Xn interface (for example, backhaul). The gNB203 may also be referred to as a base station, a base transceiver station, a radio base station, a radio transceiver, a transceiver function, a basic service set (BSS), an extended service set (ESS), a TRP (transmitting and receiving node), or some other suitable terms. The gNB203 provides the UE201 with access points to 5GC/EPC210. Examples of UE201 include cellular telephones, smart phones, Session Initiation Protocol (SIP) telephones, laptops, personal digital assistants (PDAs), satellite radios, non-terrestrial base station communications, satellite mobile communications, global positioning systems, multimedia apparatuses, video apparatuses, digital audio players (for example, MP3 players), cameras, game consoles, drones, aircrafts, narrowband Internet of Things devices, machine type communication devices, land transportation vehicles, automobiles, wearable devices, or any other similar functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terms. The gNB203 is connected to the 5GC/EPC210 via an S1/NG interface. The 5GC/EPC210 includes: MME (Mobility Management Entity)/AMF (Authentication Management Field)/SMF (Session Management Function) 211, other MME/AMF/SMF214, S-GW (Serving Gateway)/UPF (UserPlaneFunction) 212, and P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted through the S-GW/UPF212, and the S-GW/UPF212 itself is connected to the P-GW/UPF213. The P-GW provides UE IP address assignment and other functions. The P-GW/UPF213 is connected to the Internet services 230. The Internet services 230 comprise an operator's corresponding Internet protocol service, which may specifically include the Internet, intranets, IMS (IP Multimedia Subsystem), and packet switching streaming services. If proximity services (ProSe) are involved, the network architecture may further comprise ProSe-related network elements, such as ProSe function 250, ProSe application server 230, etc. The ProSe function 250 is a logical function for network-related behaviors required for ProSe (Proximity-based Service); and includes the DPF (Direct Provisioning Function), Direct Discovery Name Management Function, EPC-level Discovery ProSe Function, etc. The ProSe application server 230 has functions such as storing EPC ProSe user ID, mapping between an application layer user ID and the EPC ProSe user ID, and assigning ProSe-limited code suffix pools.

As one embodiment, the first node in the present application is UE201.

As one embodiment, a serving base station of the first node in the present application is gNB203.

As one embodiment, a wireless link from the UE201 to NR Node B is uplink.

As one embodiment, a wireless link from NR Node B to the UE201 is downlink.

As one embodiment, the UE201 supports relay transmission.

As one embodiment, the UE201 supports broadcast and multicast services.

As one embodiment, the UE201 does not support relay transmission.

As one embodiment, the UE201 supports multi-TRP transmission.

As one embodiment, the UE201 is a transportation vehicle comprising automobiles.

As one embodiment, the gNB203 is a base station.

As one embodiment, the gNB203 is a base station that supports multiple TRPs.

As one embodiment, the gNB203 is a base station that supports broadcast and multicast services.

As one embodiment, the gNB203 is a flight platform device.

As one embodiment, the gNB203 is a satellite device.

### Embodiment 3

Embodiment 3 shows a schematic diagram of an embodiment of a wireless protocol architecture of a user plane and a control plane according to the present application, as shown in FIG. 3. FIG. 3 is a schematic diagram illustrating an embodiment of a radio protocol architecture for a user plane 350 and a control plane 300. FIG. 3 presents a radio protocol architecture for the control plane 300, using three layers: Layer 1, Layer 2, and Layer 3, which is used between a first node (satellite or aircraft in UE, gNB or NTN) and a second node (satellite or aircraft in gNB, UE or NTN), or between two pieces of UE. Layer 1 (L1 layer) is the lowest layer and implements various PHY (physical layer) signal processing functions. The L1 layer will be referred to herein as PHY301. Layer 2 (L2 layer) 305 is above PHY301 and is responsible for links between the first node and the second node and the two pieces of UE through PHY301. The L2 layer 305 comprises a MAC (Medium Access Control) sub-layer 302, an RLC (Radio Link Control) sub-layer 303, and a PDCP (Packet Data Convergence Protocol) sub-layer 304, which terminate at the second node. The PDCP sublayer 304 provides multiplexing between different radio bearers and logical channels. The PDCP sub-layer 304 also provides security through packet data encryption, and provides handover support between the second communication node device and the first communication node device. The RLC sublayer 303 provides segmentation and reassembly of upper layer data packets, retransmission of lost data packets, and reordering of data packets to compensate for disordered reception caused by HARQ. The MAC sublayer 302 provides multiplexing between logical channels and transport channels. The MAC sub-layer 302 is also responsible for assigning various radio resources (for example, resource blocks) in a cell among the first nodes. The MAC sublayer 302 is also responsible for HARQ operations. The RRC (Radio Resource Control) sub-layer 306 in Layer 3 (L3 layer) in the control plane 300 is responsible for obtaining radio resources (that is, radio bearers) and configuring the lower layer by using the RRC signaling between the second node and the first node. The PC5-S (PC5 Signaling Protocol) sub-layer 307 is responsible for processing the signaling protocol of the PC5 interface. The radio protocol architecture of the user plane 350 comprises Layer 1 (L1 layer) and Layer 2 (L2 layer). Regarding the radio protocol architecture used between the first node and the second node in the user plane 350, the physical layer 351, a PDCP sublayer 354 in L2 layer 355, an RLC sublayer 353 in L2 layer 355 and a MAC sublayer 352 in L2 layer 355 are generally the same as the corresponding layers and sublayers in the control plane 300, but the PDCP sublayer 354 also provides header compression for upper layer data packets to reduce radio transmission overhead. The L2 layer 355 in the user plane 350 also comprises an SDAP (Service Data Adaptation Protocol) sub-layer 356, and the SDAP sub-layer 356 is responsible for mapping between QoS streams and data radio bearers (DRBs) to support service diversity. Although not shown, the first node may have several upper layers above L2 layer 355. In addition, it also comprises a network layer (for example, IP layer) terminated at P-GW on the network side and an application layer terminated at the other end of the connection (for example, remote UE, server, etc.). A radio bearer is an interface or service provided by a PDCP protocol layer to an upper layer.

As one embodiment, the wireless protocol architecture in FIG. 3 is applicable to the first node in the present application.

As one embodiment, the first signaling in the present application is generated in the RRC306.

As one embodiment, the first signal in the present application is generated in the RRC306 or MAC302 or PHY301.

### Embodiment 4

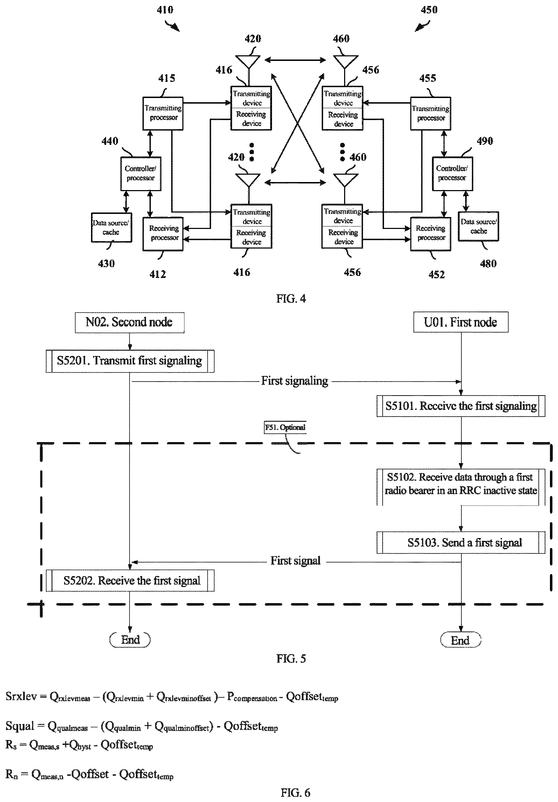

Embodiment 4 shows a schematic diagram of a first communication device and a second communication device according to one embodiment of the present application, as shown in FIG. 4. FIG. 4 is a block diagram of the first communication device 450 and the second communication device 410 that communicate with each other in the access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In transmission from the second communication device 410 to the first communication device 450, at the second communication device 410, upper layer data packets from the core network are provided to the controller/processor 475. The controller/processor 475 implements the functionality of the L2 layer. In transmission from the second communication device 410 to the first communication device 450, the controller/processor 475 provides header compression, encryption, packet segmentation and reordering, multiplexing between logical channels and transport channels, and radio resource assignment of the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for the L1 layer (that is, the physical layer). The transmitting processor 416 implements encoding and interleaving to facilitate forward error correction (FEC) at the second communication device 410, and mapping of signal clusters based on various modulation schemes (for example, Binary Phase Shift Keying (BPSK), Quadrature Phase Shift Keying (QPSK), M-Phase Shift Keying (M-PSK), M-Quadrature Amplitude Modulation (M-QAM)). The multi-antenna transmitting processor 471 performs digital spatial precoding of the encoded and modulated symbols, including codebook-based precoding and non-codebook-based precoding, and beamforming processing, to generate one or more spatial streams. The transmitting processor 416 then maps each spatial stream to a subcarrier, multiplexes with a reference signal (for example, pilot) in the time domain and/or frequency domain, and then uses Inverse Fast Fourier Transform (IFFT) to generate a physical channel carrying a time domain multi-carrier symbol stream. The multi-antenna transmitting processor 471 then performs transmit analog precoding/beamforming operations on the time domain multi-carrier symbol stream. Each transmitting device 418 converts the baseband multi-carrier symbol stream provided by the multi-antenna transmitting processor 471 into a radio frequency stream, and then provides it to different antennas 420.

In transmission from the second communication device 410 to the first communication device 450, at the first communication device 450, each receiving device 454 receives a signal through its corresponding antenna 452. Each receiving device 454 recovers information modulated to the radio frequency carrier and converts the radio frequency stream into a baseband multi-carrier symbol stream to provide it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses Fast Fourier Transform (FFT) to convert the baseband multi-carrier symbol stream from the time domain to the frequency domain after the receiving analog precoding/beamforming operations. In the frequency domain, the physical layer data signals and the reference signals are demultiplexed by the receiving processor 456, where the reference signals are used for channel estimation, and the data signals undergo multi-antenna detection in the multi-antenna receiving processor 458 to recover any spatial stream destined for the first communication device 450. Symbols on each spatial stream are demodulated and recovered in the receiving processor 456 and generate soft decisions. The receiving processor 456 then decodes and deinterleaves the soft decisions to recover upper layer data and control signals transmitted by the second communication device 410 on the physical channel. The upper layer data and control signals are then provided to the controller/processor 459. The controller/processor 459 implements the functions of the L2 layer. The controller/processor 459 may be associated with a memory 460 storing program codes and data. The memory 460 may be referred to as a computer-readable medium. In transmission from the second communication device 410 to the second communication device 450, the controller/processor 459 provides demultiplexing between transport channels and logical channels, packet reassembly, decryption, header decompression, and control signal processing to recover upper layer data packets from the core network. The upper layer data packets are then provided to all protocol layers above the L2 layer. Various control signals may also be provided to L3 for L3 processing.

In transmission from the first communication device 450 to the second communication device 410, at the first communication device 450, the data source 467 is used for providing upper layer data packets to the controller/processor 459. The data source 467 represents all protocol layers above the L2 layer. Similar to the transmission function at the second communication device 410 as described for the transmission from the second communication device 410 to the first communication device 450, the controller/processor 459 implements header compression, encryption, packet segmentation and reordering, and multiplexing between logical channels and transport channels based on wireless resource assignment, thereby implementing L2 layer functions for the user plane and the control plane. The controller/processor 459 is also responsible for retransmission of lost packets and signaling to the second communication device 410. The transmitting processor 468 performs modulation mapping and channel encoding processing, and the multi-antenna transmitting processor 457 performs digital multi-antenna spatial precoding, including codebook-based precoding and non-codebook-based precoding, and beamforming processing. The transmitting processor 468 modulates the resulting spatial streams into multi-carrier/single-carrier symbol streams. These streams undergo analog precoding/beamforming operations in the multi-antenna transmitting processor 457 before being provided to different antennas 452 via the transmitting device 454. Each transmitting device 454 first converts baseband symbol streams provided from the multi-antenna transmitting processor 457 into radio frequency symbol streams, and then provides the radio frequency symbol streams to the antenna 452.

In transmission from the first communication device 450 to the second communication device 410, the function at the second communication device 410 is similar to the reception function at the first communication device 450 as described for the transmission from the second communication device 410 to the first communication device 450. Each receiving device 418 receives the radio frequency signals through its corresponding antenna 420, converts the received radio frequency signals into baseband signals, and provides the baseband signals to the multi-antenna receiving processor 472 and the receiving processor 470. The receiving processor 470 and the multi-antenna receiving processor 472 jointly implement the function of L1. The controller/processor 475 implements the functions of the L2 layer. The controller/processor 475 may be associated with a memory 476 storing program codes and data. The memory 476 may be referred to as a computer-readable medium. In transmission from the first communication device 450 to the second communication device 410, the controller/processor 475 provides demultiplexing between transport channels and logical channels, packet reassembly, decryption, header decompression, and control signal processing to recover upper layer data packets from the UE450. The upper layer data packets from the controller/processor 475 may be provided to the core network.

As one embodiment, the first communication device 450 comprises: at least one processor and at least one memory, the at least one memory comprising computer program codes, wherein The at least one memory and the computer program codes are configured to be used together with the at least one processor. The first communication device 450 at least: receives first signaling; and in response to receiving the first signaling, enters an RRC inactive state, whether to maintain a first cell in the RRC inactive state depending on whether execution of the first signaling will suspend a radio bearer in a first radio bearer set; when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, the first communication device 450 comprises: a memory storing a computer-readable instruction program that generates an action when executed by at least one processor, the action comprising: receiving first signaling; and in response to receiving the first signaling, entering an RRC inactive state, whether to maintain a first cell in the RRC inactive state depending on whether execution of the first signaling will suspend a radio bearer in a first radio bearer set; when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, the first communication device 450 corresponds to the first node in the present application.

As one embodiment, the second communication device 410 corresponds to the second node in the present application.

As one embodiment, the first communication device 450 is UE.

As one embodiment, the first communication device 450 is a vehicle terminal.

As one embodiment, the first communication device 450 is a relay.

As one embodiment, the second communication device 410 is a base station.

As one embodiment, a receiving device 456 (comprising an antenna 460), a receiving processor 452 and a controller/processor 490 are used for receiving the first signaling in the present application.

As one embodiment, a transmitting device 456 (comprising an antenna 460), a transmitting processor 455 and a controller/processor 490 are used for transmitting the first signal in the present application.

### Embodiment 5

Embodiment 5 illustrates a flowchart of wireless signal transmission according to one embodiment of the present application, as shown in FIG. 5. In FIG. 5, U01 corresponds to the first node of the present application, and it is particularly noted that the order in this example does not limit the order of signal transmission and the order of implementation in the present application, where steps in F51 are optional.

For **the first node U01,** in step S5101, the first signaling is received; in step S5102, data is received via the first radio bearer in the RRC_INACTIVE state; and in step S5103, a first signal is transmitted.

For **the second node N02,** in step S5201, the first signaling is transmitted; and in step S5202, a first signal is received.

In Embodiment 5, whether to maintain a first cell in the RRC_INACTIVE state depends on whether execution of the first signaling suspends a radio bearer in a first radio bearer set; when execution of the first signaling does not suspend at least one radio bearer in the first radio bearer set, the first cell is maintained in the RRC_INACTIVE state, when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, the second node N02 is a serving cell of the first node U01.

As one embodiment, the second node N02 is a primary cell (PCell) of the first node U01.

As one embodiment, the second node N02 is a special cell (SpCell) of the first node U01.

As one embodiment, the second node N02 is PSCell of the first node U01.

As one embodiment, the second node N02 is a base station.

As one embodiment, the second node N02 is a DU (data unit).

As one embodiment, the first signaling is transmitted via unicast.

As one embodiment, an interface between the first node U01 and the second node U02 is a Uu interface.

As one embodiment, the second node N02 corresponds to a first cell or a base station of the first cell.

As one embodiment, the second node N02 corresponds to a cell group to which the first cell belongs.

As one embodiment, in step S5101, a broadcast or multicast stream remains mapped on the first radio bearer.

As one embodiment, the first radio bearer is a radio bearer in the first radio bearer set.

As one embodiment, after execution of the first signaling, a multicast stream remains mapped on the first radio bearer.

As one embodiment, the first radio bearer is not suspended after execution of the first signaling.

As one embodiment, the first radio bearer is not released after execution of the first signaling.

As one embodiment, the first node U01 is in the RRC_INACTIVE state after executing S5101 and prior to step S5102.

As one embodiment, the first signaling is an RRC message.

As one embodiment, the first signaling is the last unicast RRC signaling received by the first node U01 in the RRC_CONNECTED state.

As one embodiment, execution of the first signaling causes reestablishment of the first radio bearer.

As one embodiment, execution of the first signaling does not cause reestablishment of the first radio bearer.

As one embodiment, the first signaling does not indicate reestablishment of the first radio bearer.

As one embodiment, execution of the first signaling causes RRC connection reestablishment.

As one embodiment, execution of the first signaling does not cause RRC connection reestablishment.

As one embodiment, the first signaling does not indicate reestablishment of RRC connection.

As one embodiment, prior to receiving the first signaling, the first node U01 receives a first service via a radio bearer other than the first radio bearer; and after execution of the first signaling, the first node U01 receives the first service via the first radio bearer in the RRC_INACTIVE state.

As one embodiment, the first signaling comprises a configuration of an RLC entity or RLC bearer associated with the first radio bearer.

As one embodiment, in step S5102, the first node receives data from a first cell via a first radio bearer.

As one embodiment, the first signal comprises an RRC message.

As one embodiment, the first signal comprises an msg3 message.

As one embodiment, the first signal comprises a signal of a random access process.

As one embodiment, the first signal is transmitted via SRB0.

As one embodiment, the first signal is used for restoring or continuing RRC connection.

As one embodiment, along with the transmission of the first signaling, the first node (U01) maintains a SRB1 radio bearer.

As one embodiment, the first signal comprises RRCResumeRequest.

As one embodiment, the first signal comprises RRCResumeRequest1.

As one embodiment, the first signal comprises a reason for RRC continuation.

As one embodiment, the first signal comprises an identity of the first node U01.

As one embodiment, the first node U01 transmits a first signal as a response in which any condition in a second condition set is satisfied, the first signal being used for requesting RRC connection continuation.

As one embodiment, whether the second condition set comprises a second condition is related to whether non-unicast services for multicast services are received in an RRC discontinuous state.

As one embodiment, when non-unicast services for multicast services are not received in an RRC discontinuous state, the second condition set does not comprise the second condition.

As one embodiment, when non-unicast services for multicast services are received in an RRC discontinuous state, the second condition set comprises the second condition.

As one embodiment, the second condition is that a quality of a serving cell is worse than a second quality threshold.

As one embodiment, when non-unicast services for multicast services are not received in an RRC discontinuous state, the second condition set comprises NAS instructions.

As one embodiment, when non-unicast services for multicast services are received in an RRC discontinuous state, the second condition set comprises the need to perform small data transmission.

As one embodiment, when non-unicast services for multicast services are not received in an RRC discontinuous state, the second condition set comprises: requiring an RAN (Radio Access Network) area update.

As one embodiment, when non-unicast services for multicast services are not received in an RRC discontinuous state, the second condition set comprises the need to transmit user data or user signaling.

As one embodiment, when non-unicast services for multicast services are not received in an RRC discontinuous state, the second condition set comprises reception of a paging message.

As one embodiment, the first signaling comprises the second quality threshold.

As one embodiment, the second quality threshold is an RSRP threshold.

As one embodiment, a quality of the serving cell comprises a quality of the first cell.

As one embodiment, a quality of the serving cell comprises RSRP of the serving cell.

As one embodiment, in an RRC discontinuity state, the first node has only one serving cell.

As one embodiment, the first node U01, in the RRC_INACTIVE state, suspends a radio bearer used for the first service in response to the completion of reception of the first service and a radio bearer used for the first service not carrying other non-unicast services.

As one embodiment, the first radio bearer receives an indication of the completion of the first service.

As one embodiment, the network transmits an indication of the completion of the first service.

As one embodiment, the network transmits an indication of the completion of the first service via broadcasting and multicasting.

As one embodiment, the first node U01 autonomously determines the completion of the first service, for example, the first service is completed at an agreed time.

As one embodiment, if any radio bearer used by the first service does not carry other non-unicast services, the any radio bearer used by the first service is suspended.

As one sub-embodiment of this embodiment, the other non-unicast services comprise MBS services.

As one sub-embodiment of this embodiment, the other non-unicast services comprise broadcast and multicast services.

As one embodiment, if any radio bearer used by the first service does not carry other non-unicast services, the any radio bearer used by the first service is released.

As one sub-embodiment of this embodiment, the other non-unicast services comprise MBS services.

As one sub-embodiment of this embodiment, the other non-unicast services comprise broadcast and multicast services.

As one embodiment, when reception of the first service is completed and a radio bearer used by the first service still carries other non-unicast services, the radio bearer used by the first service is neither suspended nor released.

As one embodiment, a radio bearer used by the first service is a radio bearer carrying the first service.

As one embodiment, a radio bearer used by the first service is a radio bearer mapped by the first service.

### Embodiment 6

Embodiment 6 illustrates a schematic diagram of a criterion for cell selection reselection according to one embodiment of the present application, as shown in FIG. 6.

As one embodiment, Srxlev in FIG. 6 is a cell selection RX (receive) level value.

As one embodiment, the unit of Srxlev in FIG. 6 is dB.

As one embodiment, Squal in FIG. 6 is a cell selection quality value.

As one embodiment, the unit of Squal in FIG. 6 is dB.

As one embodiment, Qᵣₓₗₑᵥₘₑₐₛ in FIG. 6 is a measured cell RX level value, that is, RSRP.

As one embodiment, Q_{qualmeas} in FIG. 6 is a measured cell quality value, that is, RSRQ (Reference Signal Receiving Quality).

As one embodiment, Qᵣₓₗₑᵥₘᵢₙ in FIG. 6 is the minimum required RX level in a cell, with the unit of dBm.

As one embodiment, the first signaling indicates Qᵣₓₗₑᵥₘᵢₙ.

As one embodiment, the network-transmitted SIB message indicates Qᵣₓₗₑᵥₘᵢₙ.

As one embodiment, Q_{qualmin} in FIG. 6 is the minimum required RX level in a cell, with the unit of dBm.

As one embodiment, the first signaling indicates Q_{qualmin}.

As one embodiment, the network-transmitted SIB message indicates Q_{qualmin}.

As one embodiment, Q_{rxlevminoffset} in FIG. 6 is an offset applied to the network-indicated Qᵣₓₗₑᵥₘᵢₙ.

As one embodiment, Q_{qualminoffset} in FIG. 6 is the offset applied to the network-indicated Q_{qualmin}.

As one embodiment, P_{compensation} in FIG. 6 is set to 0 for FR2.

As one embodiment, for FR1, if SIB1, SIB2 and SIB4 transmitted by the network indicate additionalPmax in NR-NS-PmaxList, P_{compensation} in FIG. 6 is set to max(P_{EMAX1}-P_{PowerClass}, 0) - (min(P_{EMAX2}, P_{PowerClass}) - min(P_{EMAX1}, P_{PowerClass})) (dB), where max() is the maximum value and min() is the minimum value.

As one embodiment, for FR1, if SIB1, SIB2 and SIB4 transmitted by the network do not comprise NR-NS-PmaxList or do not indicate additionalPmax in NR-NS-PmaxList, P_{compensation} in FIG. 6 is set to max(P_{EMAX1}-P_{PowerClass}, 0) (dB).

As one embodiment, P_{EMAX1}, P_{EMAX2} are respectively the uplink maximum transmit power level of UE, such as the first node U01.

As one embodiment, P_{EMAX1}, P_{EMAX2} are fixed.

As one embodiment, P_{EMAX1}, P_{EMAX2} are network-configured.

As one embodiment, P_{EMAX1}, P_{EMAX2} are respectively the uplink maximum transmission power levels of a UE, such as the first node U01, in the first cell.

As one embodiment, P_{PowerClass} is the maximum RF output power of a UE, such as the first node U01.

As one embodiment, Qoffsetₜₑₘₚ is a temporary offset.

As one embodiment, the second node N02 indicates Qoffsetₜₑₘₚ.

As one embodiment, the first signaling indicates Qoffsetₜₑₘₚ.

As one embodiment, the first criterion comprises Srxlev greater than 0.

As one embodiment, the first criterion comprises Squal greater than 0.

As one embodiment, the first criterion comprises an S criterion.

As one embodiment, the first criterion comprises Srxlev greater than a first threshold.

As one embodiment, the first criterion comprises Srxlev greater than a second threshold.

As one embodiment, the first signaling indicates the first threshold.

As one embodiment, the first signaling indicates the second threshold.

As one embodiment, the second criterion comprises Srxlev greater than 0.

As one embodiment, the second criterion comprises Squal greater than 0.

As one embodiment, the second criterion comprises Srxlev greater than a third threshold.

As one embodiment, the second criterion comprises Squal greater than a fourth threshold.

As one embodiment, the first signaling indicates the third threshold.

As one embodiment, the first signaling indicates the fourth threshold.

As one embodiment, the meaning of the phrase "a first offset is applied to the first cell" comprises: the first offset is included in Qoffsetₜₑₘₚ.

As one embodiment, the meaning of the phrase "a first offset is applied to the first cell" comprises: when determining Srxlev for the first cell, Srxlev=Qᵣₓₗₑᵥₘₑₐₛ- (Qᵣₓₗₑᵥₘᵢₙ+ Qrxlevminoffset) - P_{compensation}- Qoffsetₜₑₘₚ+ Q₁, where Q0₁ is the first offset.

As one embodiment, the meaning of the phrase "a first offset is applied to the first cell" comprises: when determining Squal for the first cell, Squal = Q_{qualmeas}- (Q_{qualmin}+ Q_{qualminoffset}) - Qoffsetₜₑₘₚ+ Q₂, where Q₂ is the first offset.

As one embodiment, the first signaling indicates the first offset.

As one embodiment, a broadcast message from the network indicates the first offset.

As one embodiment, an SIB message of the second node N02 indicates the first offset.

As one embodiment, the first offset is applied only to a cell providing the first service.

As one embodiment, Rₛ is for a serving cell.

As one embodiment, Rₙ is for a neighbor cell.

As one embodiment, Q_{meas,s} is an RSRP measurement result of cell reselection for a serving cell.

As one embodiment, Q_{meas,n} is an RSRP measurement result of cell reselection for a neighbor cell.

As one embodiment, for co-frequency, if Qoffset_{s,n} is available, Qoffset equals Qoffset_{s,n}, otherwise Qoffset_{s,n} equals 0.

As one embodiment, for heterofrequency, if Qoffset_{s,n} is available, Qoffset equals Qoffset_{s,n}+Qoffset_{frequency}, otherwise Qoffset_{s,n} equals Qoffset_{frequency}.

As one embodiment, Qoffset_{s,n} is available when the network indicates Qoffset_{s,n}.

As one embodiment, when the first cell is a serving cell, Rₛ for the first cell = Q_{meas,s}+Q_{hyst} - Qoffsetₜₑₘₚ, where Qoffsetₜₑₘₚ comprises the first offset.

As one embodiment, when the first cell is a serving cell, Rₛ for the first cell = Q_{meas,s}+Q_{hyst}- Qoffsetₜₑₘₚ+ Q₃, where Q₃ is the first offset.

As one embodiment, Q_{hyst} is a hysteresis factor.

As one embodiment, the network configuration is performed on Q_{hyst}.

As one embodiment, when the first cell is a neighbor cell, Rₙ for the first cell = Q_{meas,n}-Qoffset -Qoffsetₜₑₘₚ, where Qoffsetₜₑₘₚ comprises the first offset.

As one embodiment, when the first cell is a neighbor cell, Rₙ for the first cell = Q_{meas,n}-Qoffset - Qoffsetₜₑₘₚ + Q₄, where Q₄ is the first offset.

As one embodiment, for any serving cell that does not provide the first service, Rₛ= Q_{meas,s} + Q_{hyst} - Qoffsetₜₑₘₚ.

As one embodiment, for any neighbor cell that does not provide the first service, Rₙ = Q_{meas,n}- Qoffset - Qoffsetₜₑₘₚ.

As one embodiment, the meaning of the phrase "a first cell is applied to the first offset" comprises: when calculating Rₛ of the first cell, Rₛ of the first cell = Q_{meas,s} + Q_{hyst} - Qoffsetₜₑₘₚ + Q₃, where Q₃ is the first offset.

As one embodiment, the meaning of the phrase "a first offset is applied to the first cell" comprises: when calculating Rₙ of the first cell, Rₙ of the first cell = Q_{meas,n} - Qoffset - Qoffsetₜₑₘₚ + Q₄, where Q₄ is the first offset.

As one embodiment, in cell reselection, Rₛ, Rₙ are sorted, and a cell corresponding to the highest ranking value is selected.

As one embodiment, in cell reselection, Rₛ or Rₙ of all candidate cells are sorted, and a cell corresponding to the highest ranking value is selected.

As one embodiment, the second criterion is an S criterion.

As one embodiment, the second criterion comprises RSRP of the first cell greater than one specific threshold.

As one sub-embodiment of this embodiment, the first signaling indicates the one specific threshold.

As one embodiment, the network indicates the one specific threshold.

As one embodiment, the network indicates the one specific threshold value via SIB messaging.

As one embodiment, the first criterion comprises: in candidate cells, sorting Rₛ or Rₙ of all candidate cells, and selecting a cell corresponding to the highest ranking value.

As one embodiment, the first criterion comprises: selecting a cell with the best reception quality in all suitable cells.

As one embodiment, the first criterion comprises: selecting serving cells in all suitable cells unless a reception quality of the one neighbor cell is better than a reception quality of a serving cell by a given threshold value.

As one embodiment, the first criterion comprises: not reselecting neighbor cells in all suitable cells unless a reception quality of the one neighbor cell is better than a reception quality of a serving cell by a given threshold value.

### Embodiment 7

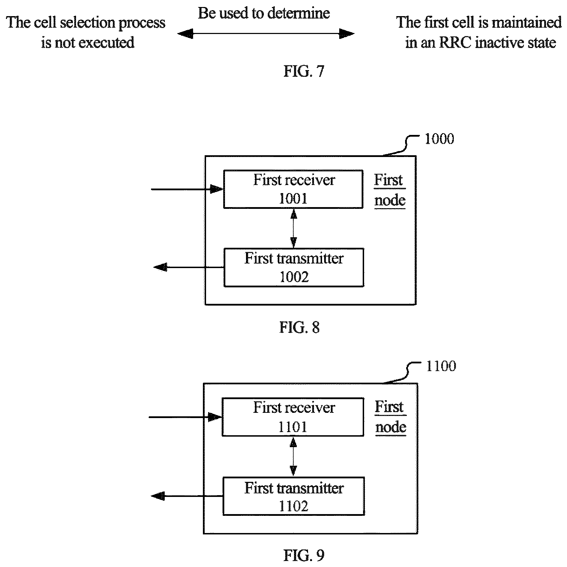

Embodiment 7 illustrates a schematic diagram in which the cell selection process not performed is used for determining that a first cell is maintained in the RRC_INACTIVE state according to one embodiment of the present application, as shown in FIG. 7.

As one embodiment, the cell selection process comprises: selecting a cell according to reception quality among all candidate cells.

As one embodiment, the cell selection process comprises: selecting a cell according to reception strength among all candidate cells.

As one embodiment, the cell selection process comprises: pre-storing information to select a cell.

As one embodiment, when the cell selection process is not performed, the first cell is maintained in the RRC_INACTIVE state.

As one embodiment, when the cell selection process is not performed, the first cell is maintained when entering the RRC_INACTIVE state.

As one embodiment, when the cell selection process is performed, whether the first cell is maintained depends on a first criterion.

As one embodiment, when the cell selection process is performed, whether the first cell is maintained depends on reception quality of the first cell.

As one embodiment, when the cell selection process is performed, whether the first cell is maintained depends on signal strength of the first cell.

As one embodiment, when the cell selection process is performed, whether the first cell is maintained is related to whether the first cell provides the first service.

As one embodiment, when the cell selection process is performed, whether the first cell is maintained is not related to whether the first cell provides the first service.

### Embodiment 8

Embodiment 8 illustrates a structural block diagram of a processing apparatus for a first node according to one embodiment of the present application, as shown in FIG. 8. In FIG. 8, the processing apparatus 1000 in the first node comprises a first receiver 1001 and a first transmitter 1002. In Embodiment 8,

a first receiver 1001 receives the first signaling, and in response to receiving the first signaling, enters an RRC inactive state, whether to maintain a first cell in the RRC inactive state depending on whether execution of the first signaling will suspend a radio bearer in a first radio bearer set;

when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

As one embodiment, the sentence "the first cell is maintained when at least one radio bearer in the first radio bearer set is not suspended" is true only if the first cell meets a second criterion.

As one embodiment, when execution of the first signaling suspends all radio bearers in the first radio bearer set, the cell selection process is performed in accordance with the first criterion; when execution of the first signaling does not suspend at least one radio bearer in the first radio bearer set, the cell selection process is not performed, and the cell selection process being not performed is used for determining that the first cell is maintained in the RRC_INACTIVE state.

As one embodiment, the first receiver 1001 receives the first service prior to receiving the first signaling.

As one embodiment, the meaning of the sentence "when execution of the first signaling does not suspend at least one radio bearer in the first radio bearer set, the first cell is maintained in the RRC_INACTIVE state" comprises: execution of the first signaling comprises cell selection, and the first cell is selected with preference in cell selection.

As one embodiment, the meaning of the phrase "the first cell is selected with preference" comprises: during cell selection, the first cell is directly selected without performing a comparison of reception quality for candidate cells.

As one embodiment, the meaning of the phrase "the first cell is selected with preference" comprises: in the process of performing cell selection, a first offset is applied to the first cell.

As one embodiment, a first transmitter 1002 transmits a first signal as a response in which any condition in a second condition set is satisfied, the first signal being used for requesting RRC connection continuation,
wherein, whether the second condition set comprises a second condition is related to whether non-unicast services for multicast are received in an RRC discontinuous state, when non-unicast services for multicast are not received in an RRC discontinuous state, the second condition set does not comprise the second condition, when non-unicast services for multicast are received in an RRC discontinuous state, the second condition set comprises the second condition; and the second condition is that a quality of a serving cell is worse than a second quality threshold.

As one embodiment, the first receiver 1001, in the RRC_INACTIVE state, suspends a radio bearer used for the first service in response to the completion of reception of the first service and a radio bearer used for the first service not carrying other non-unicast services.

As one embodiment, the first node is user equipment (UE).

As one embodiment, the first node is a terminal that supports large latency differences.

As one embodiment, the first node is a terminal that supports NTN.

As one embodiment, the first node is an aircraft.

As one embodiment, the first node is a vehicle terminal.

As one embodiment, the first node is a relay.

As one embodiment, the first node is a vessel.

As one embodiment, the first node is an Internet of Things terminal.

As one embodiment, the first node is an Industrial Internet of Things terminal.

As one embodiment, the first receiver 1001 comprises at least one of an antenna 452, a receiving device 454, a receiving processor 456, a multi-antenna receiving processor 458, a controller/processor 459, a memory 460, or a data source 467 in Embodiment 4.

As one embodiment, the first transmitter 1002 comprises at least one of an antenna 452, a transmitting device 454, a transmitting processor 468, a multi-antenna transmitting processor 457, a controller/processor 459, a memory 460, or a data source 467 in Embodiment 4.

### Embodiment 9

Embodiment 9 illustrates a structural block diagram of a processing apparatus for a first node according to one embodiment of the present application, as shown in FIG. 9. In FIG. 9, the processing apparatus 1100 in the first node comprises a first receiver 1101 and a first transmitter 1102. In Embodiment 9,
a first receiver 1101 receives the first signaling, and in response to receiving the first signaling, enters the RRC_INACTIVE state wherein
the first receiver 1101 receives a first service via the first radio bearer in the RRC_INACTIVE state, and
for the first receiver 1101 in the RRC_INACTIVE state, whether to autonomously suspend the first radio bearer upon the completion of the first service is related to a type of the first radio bearer,
wherein, the first radio bearer does not carry other non-unicast services, the first service being a non-unicast service, the meaning of the sentence "in the RRC_INACTIVE state, whether to suspend the first radio bearer upon the completion of the first service is related to a type of the first radio bearer" comprises: when the first radio bearer is MRB for multicast, autonomously suspending the first radio bearer, and when the first radio bearer is DRB, the first radio bearer is not suspended autonomously.

As one embodiment, the first receiver 1101 continues the first radio bearer in the RRC_INACTIVE state in response to receiving second signaling, wherein, the first radio bearer is suspended prior to receiving the second signaling.

As one embodiment, the second signaling indicates the first radio bearer to carry a second service, the second service being a non-unicast service.

As one embodiment, the second signaling is used for indicating that the second service is about to begin transmission.

As one embodiment, the second service is the first service, or the second service is a service other than the first service.

As one embodiment, the meaning of "autonomously suspending the first radio bearer" comprises: there is no need to receive signaling indicating to suspend the first radio bearer.

As one embodiment, the meaning of "autonomously suspending the first radio bearer" comprises: suspending the first radio bearer even when signaling indicating to suspend the first radio bearer is not received.

As one embodiment, the meaning of "autonomously suspending the first radio bearer" comprises: suspending the first radio bearer even when no RRCRelease message is received.

As one embodiment, the meaning of "autonomously suspending the first radio bearer" comprises: suspending the first radio bearer even when no RRCReject message is received.

As one embodiment, the meaning of "not autonomously suspending the first radio bearer" comprises: there is a need to receive signaling indicating to suspend the first radio bearer so as to suspend the first radio bearer.

As one embodiment, the meaning of "not autonomously suspending the first radio bearer" comprises: not suspending the first radio bearer when signaling indicating to suspend the first radio bearer is not received.

As one embodiment, the meaning of "not autonomously suspending the first radio bearer" comprises: not suspending the first radio bearer when no RRCRelease is received.

As one embodiment, the meaning of "not autonomously suspending the first radio bearer" comprises: not suspending the first radio bearer when no RRCReject is received.

As one embodiment, the first transmitter 1102 transmits a first report, the first report comprising a reception report of the first service in the RRC_INACTIVE state.

As one embodiment, the first transmitter 1102 transmits a first report, the first report comprising a reception report of the second service in the RRC_INACTIVE state.

As one embodiment, the first node always remains in the RRC_INACTIVE state after entering the RRC_INACTIVE state.

As one embodiment, the first node always remains in the RRC_INACTIVE state after entering the RRC_INACTIVE state at least before the first report is transmitted.

As one embodiment, whether a first cell is selected with preference during cell reselection is related to whether the first cell provides the first service.

As one embodiment, whether the first cell is selected with preference during cell reselection is related to whether the first cell provides the second service.

As one embodiment, the second information comprises the first key.

As one embodiment, the first node is user equipment (UE).

As one embodiment, the first node is a terminal that supports large latency differences.

As one embodiment, the first node is a terminal that supports NTN.

As one embodiment, the first node is an aircraft.

As one embodiment, the first node is a vehicle terminal.

As one embodiment, the first node is a relay.

As one embodiment, the first node is a vessel.

As one embodiment, the first node is an Internet of Things terminal.

As one embodiment, the first node is an Industrial Internet of Things terminal.

As one embodiment, the first receiver 1101 comprises at least one of an antenna 452, a receiving device 454, a receiving processor 456, a multi-antenna receiving processor 458, a controller/processor 459, a memory 460, or a data source 467 in Embodiment 4.

As one embodiment, the first transmitter 1102 comprises at least one of an antenna 452, a transmitting device 454, a transmitting processor 468, a multi-antenna transmitting processor 457, a controller/processor 459, a memory 460, or a data source 467 in Embodiment 4.

Those skilled in the art will appreciate that all or some of the steps in the above-mentioned method may be implemented by instructing relevant hardware by a program, where the program can be stored in a computer-readable storage medium, such as a read-only memory, a hard disk or an optical disk, etc. Optionally, all or some of the steps of the above-mentioned embodiments may also be implemented using one or more integrated circuits. Correspondingly, each module unit in the above-mentioned embodiment can be implemented either in a hardware form or as software functional modules. The present application is not limited to any specific combination form of hardware and software. The user equipment, terminals and UE in the present application include but are not limited to drones, communication modules on drones, remote-controlled aircrafts, aircrafts, small aircrafts, mobile phones, tablet computers, laptops, vehicle communication devices, wireless sensors, data cards, Internet of Things terminals, RFID terminals, NB-IoT terminals, MTC (Machine Type Communication) terminals, eMTC(enhanced MTC, enhanced MTC) terminals, data cards, data cards, vehicular communication devices, low-cost mobile phones, low-cost tablet computers, satellite communication devices, ship communication devices, NTN user devices and other wireless communication devices. The base station or system device in the present application includes but is not limited to macro cellular base stations, micro cellular base stations, home base stations, relay base stations, gNB (NR Node B) NR Node B, TRPs (Transmitter Receiver Points), NTN base stations, satellite devices, flight platform devices and other wireless communication devices.

The present invention may be practiced in other designated forms without departing from its core or basic features. Therefore, the currently disclosed embodiments should be regarded as descriptive and not restrictive in any way. The scope of the invention is determined by the appended claims rather than the foregoing description, and all modifications within their equivalent meaning and area are considered to have been included therein.

## Claims

1. A first node for wireless communication, comprising:
a first receiver for receiving first signaling, and entering a RRC (Radio Resource Control)_INACTIVE state in response to receiving the first signaling, wherein whether to maintain a first cell in the RRC_INACTIVE state is related to whether execution of the first signaling suspends a radio bearer in a first radio bearer set,
when execution of the first signaling does not suspend at least one radio bearer in the first radio bearer set, the first cell is maintained in the RRC_INACTIVE state, when execution of the first signaling suspends all radio bearers in the first radio bearer set, whether to maintain the first cell in the RRC_INACTIVE state depends on a first criterion, the first criterion being used for cell selection, the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.

2. The first node according to claim 1, wherein
the sentence "when at least one radio bearer in the first radio bearer set is not suspended, the first cell is maintained" is only true if the first cell meets a second criterion.

3. The first node according to claim 2, wherein
the second criterion comprises that RSRP (Reference Signal Receiving Power) of the first cell is greater than a specific threshold.

4. The first node according to any one of claim 1 to 3, wherein
when execution of the first signaling suspends all radio bearers in the first radio bearer set, a cell selection process is performed in accordance with the first criterion; and when execution of the first signaling does not suspend at least one radio bearer in the first radio bearer set, the cell selection process is not performed, and the cell selection process being not performed is used for determining that the first cell is maintained in the RRC_INACTIVE state.

5. The first node according to any one of claim 1 to 4, comprising:
the first receiver for receiving the first service prior to receiving the first signaling.

6. The first node according to any one of claim 1 to 5, wherein
the meaning of the sentence "when execution of the first signaling does not suspend at least one radio bearer in the first radio bearer set, the first cell is maintained in the RRC_INACTIVE state" comprises: the execution of the first signaling comprises cell selection, and the first cell is selected with preference in the cell selection.

7. The first node according to claim 6, wherein
the meaning of the phrase "the first cell is selected with preference" comprises: during the cell selection, the first cell is directly selected without performing a comparison of reception quality for candidate cells.

8. The first node according to claim 6, wherein
the meaning of the phrase "the first cell is selected with preference" comprises: in a process of performing the cell selection, the first cell is applied with a first offset.

9. The first node according to any one of claim 1 to 8, comprising:
a first transmitter for transmitting a first signal as a response in which any condition in a second condition set is satisfied, the first signal being used for requesting a RRC connection continuation,
wherein, whether the second condition set comprises a second condition is related to whether non-unicast services for multicast are received in an RRC discontinuous state, when non-unicast services for multicast are not received in an RRC discontinuous state, the second condition set does not comprise the second condition, when non-unicast services for multicast are received in an RRC discontinuous state, the second condition set comprises the second condition; and the second condition is that a quality of a serving cell is worse than a second quality threshold.

10. The first node according to any one of claim 1 to 9, comprising:
the first receiver, in RRC_INACTIVE state, suspending a radio bearer used for the first service in response to completion of reception of the first service and the radio bearer used for the first service not carrying other non-unicast services.

11. The first node according to any one of claim 1 to 10, wherein
a first operation set comprises performing frequency selection.

12. The first node according to any one of claim 1 to 11, wherein
USD (User Service Description) of the first node comprises providing the first service at a frequency of the first cell.

13. The first node according to any one of claim 1 to 12, wherein
radio bearers in the first radio bearer set are all MRBs (Multicast Broadcast Service Radio Bearer).

14. The first node according to any one of claim 1 to 13, wherein
the meaning of the sentence "when execution of the first signaling does not suspend at least one radio bearer in the first radio bearer set, the first cell is maintained in the RRC_INACTIVE state" comprises: a cell selection process is performed, and the first cell is selected with preference in the cell selection process; the meaning of the phrase "the first cell is selected with preference" comprises: in a process of performing cell selection, the first cell is applied with a first offset.

15. A method for use in a first node for wireless communication, comprising:
receiving first signaling; and in response to receiving the first signaling, entering an RRC inactive state, whether to maintain a first cell in the RRC inactive state depending on whether execution of the first signaling will suspend a radio bearer in a first radio bearer set;,
when execution of the first signaling does not suspend at least one radio bearer in the first radio bearer set, the first cell is maintained in the RRC inactive state; when execution of the first signaling will suspend all radio bearers in the first radio bearer set, whether to maintain the first cell in the RRC inactive state depends on a first criterion, the first criterion being used for cell selection; the first cell is a serving cell of the first node, the first cell providing first service, the first radio bearer set comprises non-unicast radio bearers for multicast, and a radio bearer in the first radio bearer set that is not suspended by execution of the first signaling is used for carrying the first service, the first service being a non-unicast service.
